# EUROPEAN PATENT SPECIFICATION

(11) **EP 1 501 329 B1**
(45) Date of publication and mention of the grant of the patent: **27.02.2008**
(21) Application number: 04102540.4
(22) Date of filing: 04.06.2004
(51) Int. Cl.: H04Q 7/38

(54) **Wireless communication system, wireless communication unit and method for reducing the impact of jamming interference**
Drahtloses Kommunikationssystem, drahtlose Kommunikationseinheit sowie Verfahren zur Reduzierung der Auswirkung von Interferenz-Störsignalen
Système de communication sans fil, unité de communication sans fil et procédé de réduction de l'impact des signaux de brouillage interférence

(30) Priority: 25.07.2003 GB 0317373
(43) Date of publication of application: 26.01.2005
(73) Proprietor: MOTOROLA INC., Schaumburg, IL 60196 (US)
(72) Inventor: Goldstein, Mark, 67899, Tel Aviv (IL); Serfaty, Salomon, 67899, Tel Aviv (IL); Shahaf, Mark, 67899, Tel Aviv (IL); Zadok, Danny, 67899, Tel Aviv (IL)
(74) Representative: McCormack, Derek James

(56) References cited:
- EP-A- 1 041 836
- EP-A- 1 304 895
- GB-A- 2 293 523
- GB-A- 2 384 139
- US-A- 5 708 975

## Description

### Field of the Invention

This invention relates to a wireless communication system, and a communication unit and method of communication useful therein. The invention is applicable to, but not limited to, a mechanism to reduce an impact of an occasional or a jamming interference.

### Background of the Invention

Wireless communication systems, for example cellular telephony or private mobile radio communication systems, typically provide for radio telecommunication links to be arranged between a plurality of base transceiver stations (BTSs) and a plurality of subscriber units, often termed mobile stations (MSs). The term mobile station generally includes both hand-portable and vehicular mounted radio units. Wireless communication systems are distinguished over fixed communication systems, such as the public switched telephone networks (PSTN), principally in that mobile stations move between service providers (and/or different BTSs) and in doing so encounter varying radio propagation environments. In a wireless communication system, each BTS has associated with it a particular geographical coverage area (or cell). The coverage area is a particular range that the BTS can maintain acceptable communications with MSs operating within its serving cell. Often a wireless communication system may provide communication between a large number of these cells to produce an expanded system coverage area.

Multiple access techniques permit simultaneous transmissions from several MS to a single BTS over a plurality of communications channels. Some channels are used for carrying traffic communications, whilst other channels (which may be logical or dedicated channels) are used for transferring control information, such as call paging, between the BTSs and MSs. Examples of multiple access techniques include: frequency division multiple access (FDMA), time division multiplexing/ multiple access (TDM, TDMA) and code division multiple access (CDMA). Within such multiple access techniques, different duplex (two-way communication) paths are arranged. Such paths can be arranged in a frequency division duplex (FDD) configuration using a pair of radio frequencies, whereby a first frequency is dedicated for uplink communication, i.e. communication from a MS to a BTS, and a second frequency is dedicated for downlink communication, i.e. communication from a BTS to MS.

In wireless communication systems, it is known that radio frequency (RF) interference may affect the quality of a communication link. In cellular communication systems, this is due to the communication resource being limited to a number of frequencies, where the same frequencies are intelligently reused within a given geographical area, in order to provide wide area coverage and capacity. A known mechanism to minimise interference is for the system operator to employ automatic frequency planning (AFP), prior to system installation or on an off-line, irregular, basis. AFP effectively assigns frequency sub-sets to different BTSs to reduce any mutual interference. However, frequency planning does not provide a real-time solution to the problem of interference, as the plans are generally based on anticipated statistical traffic models. Moreover, since radio wave propagation is affected by changing meteorological conditions, the level of interference may vary according to the weather conditions.

The allocation of portions of spectrum to individual users, systems, and operators offers some protection between the frequency bands. However, with a limited frequency resource, radio frequency interference cannot be wholly removed using this approach.

Frequency hopping can provide a statistical improvement in resistance to interference, for example in global system mobile (GSM) communication networks. However, frequency-hopping techniques are, by their very nature, highly complex and require excessively large portions of spectrum. Thus, very few GSM/private or public radio networks deploy this technology in practice.

None of the above interference avoidance techniques provides an acceptable solution for "jamming" of the communication resource. Jamming of a communication resource, in this context, is caused by a third party intentionally generating one or more dedicated interference signal(s) to attack the communication frequencies/links in a particular geographical area. Anti-jamming techniques find particular use in military scenarios, where the communication customers have stringent requirements on several specific operational issues, such as a high-grade security, survivability, and jamming immunity.

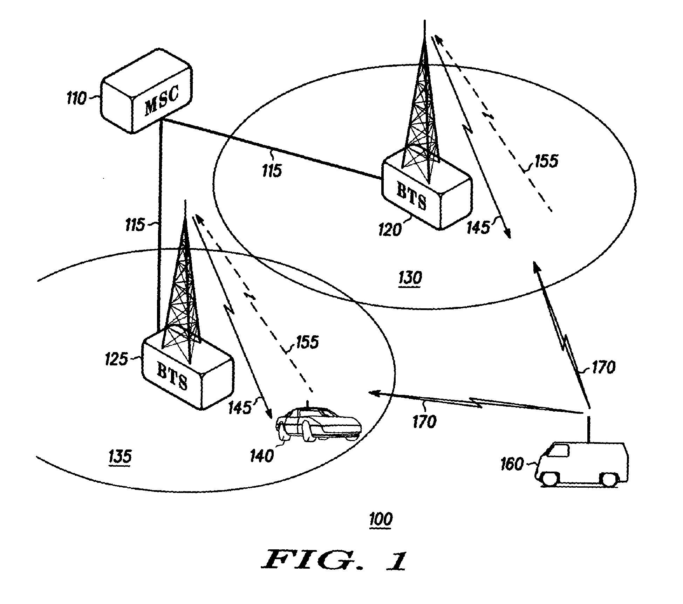

Referring now to FIG. 1, a typical wireless communication system 100 is illustrated. The wireless communication system 100 incorporates a Central Control Switch or so-called Mobile Switching Centre (MSC) 110 and a number of remote Base Transceiver Stations (BTS) 120, 125 that are operably connected to MSC 110 via site links 115. A number of MS(s) (with only MS 140 shown for clarity purposes only) are able to move throughout the coverage area 130, 135.

A single communication link consists of two frequencies: an outbound (downlink) frequency f₁ and an inbound (uplink) frequency f₂, marked as 145 and 155 respectively, for communication in respective directions between the MS 140 and the BTS 125. Any wireless communication link, i.e. link 145 or 155, is a potential subject to be jammed by interfering signal 170 generated by an adversary/jammer 160. In general, the outbound link 145 from BTS 125 to MS 140 is a continuous signal while the inbound communication link 155 from the MS 140 to the BTS 125 uses burst transmissions.

The inbound communication link 155 is considered to be more vulnerable, and is therefore the preferred target for jamming activity, due to the reduced transmission power and low antenna positioning of mobile communication units such as MS 140.

There are a number of actions that a system is able to take if it is configured with the ability to detect jamming. One action, performed only on a per-user basis, is that the system may be able to disconnect any ongoing call or stop a packet data session. A further per-user action performed in some systems includes re-locating a particular service to a different channel. These actions are typically implemented in point-to-point services such as telephony or individual calls, or packet data or any type of logical channel providing the ability to deliver specific control information. In systems supporting group-call communication, such as Motorola's integrated digitally enhanced network (iDEN^{™}), TETRA or the US APCO-25 standard, the actions may be performed on per group of users basis.

In some systems, such as GSM, it is possible to send an individual specific message addressed to a transmitting terminal. In this case, the message indicates that the uplink transmission link is not available any more. However, this case assumes that the transmitting MS has previously successfully set up a session with the BTS prior to application of the jamming signal. Thus, it does not prevent other users from attempting to use the jammed frequency. Furthermore, the solution is only applicable to a specifically identified individual user and therefore all other MSs, including those being passive receivers, are not aware about the uplink status.

In particular, the aforementioned options are viable only for MSs engaged in an ongoing service and no solution exists for MSs in so-called idle or "service-ready" mode.

Thus, there currently exists a need to provide a communication system; a communication unit and method of communication wherein the abovementioned disadvantages associated with known jamming techniques may be alleviated.

US-A-5708975 describes a method and system wherein in response to detecting a disturbance on an uplink frequency a base station informs served mobile stations of the disturbance and commands the mobile stations to remain in listening mode on the same downlink frequency.

### Summary of the invention

In accordance with a first aspect of the present invention, there is provided a wireless communication system as defined in claim 1 of the accompanying claims.

The at least one wireless serving communication unit transmits a broadcast message on an outbound communication resource indicating a non-availability of one or more inbound communication resource(s). The message is sent in response to a detection of non-availability of one or more inbound communication resource(s) owing to interference or jamming, e.g. as applied by a transmitter which is not part of the system with the intention of reducing the effectiveness of the system.

In response to detection of unavailability of an uplink channel owing to jamming or interference, the wireless serving communication unit broadcasts a notification and command as in the method of US-A-5708975. However, unlike the method of US-A-5708975, the wireless serving communication unit is operable to determine whether one or more back up uplink channels is available and, if one or more back up uplink channels is available, to broadcast to all served mobile stations a service re-location command including a channel allocation notification of an alternative inbound or uplink channel to be used. In response, each mobile station which receives the broadcast message is operable to determine whether a service relocation command is included in the message and, if it is, to switch to a back up channel indicated in the message to continue service.

In accordance with a second aspect of the present invention, there is provided a base transceiver station, as defined in Claim 8 of the accompanying claims.

In accordance with a third aspect of the present invention, there is provided a mobile station, as defined in Claim 9 of the accompanying claims.

In accordance with a fourth aspect of the present invention, there is provided a method as defined in Claim 10 of the accompanying claims.

In embodiments of the invention to be described further, the inventors of the present invention have proposed detection of non-availability of an uplink or inbound resource owing to interference or jamming and in response provision of a 'broadcast' transmission of indicating the unavailability of the uplink communication resource channel to any MS currently using, or possibly subsequently using, the affected communication resource. As noted above, the broadcast message includes a service re-location command including a channel allocation notification of an alternative inbound or uplink channel to be used. In response, each mobile station which receives the broadcast message is operable to determine whether a service relocation command is included in the message and, if it is, to switch to a back up channel indicated in the message to continue service. This enables a continuation of a communication service until the problem has been resolved and/or minimises impact of the uplink interference/jamming in subsequent call attempts by served MS(s).

Preferably the 'broadcast' transmission of an uplink communication resource's non-availability comprises an indication of alternative communication resources (frequency and/or time) to be used.

Further features of the invention are as provided in the dependent Claims.

Embodiments of the present invention will now be described, by way of example with reference to the accompanying drawings, in which:

### Brief Description of the Drawings

FIG. 1 is a block schematic diagram of a known radio communication system highlighting the aforementioned "jamming" problem.
FIG. 2 shows a block diagram of a wireless communication system that can be adapted to support the various inventive concepts of an embodiment of the present invention;
FIG. 3 illustrates a flowchart of a wireless communication system's operation according to an embodiment of the present invention;
FIG. 4 illustrates a flowchart of a wireless communication system's operation according to an enhanced embodiment of the present invention;
FIG. 5 illustrates a flowchart of an MS's operation in response to an uplink failure indication when attempting to register on a cell, in accordance with an embodiment of the present invention;
FIG. 6 illustrates a flowchart of an MS's operation in response to an uplink failure indication when in 'idle' mode, according to an embodiment of the present invention; and
FIG. 7 illustrates a flowchart of an MS's operation in response to an uplink failure indication when in an 'active' mode, according to an embodiment of the present invention.

### Description of embodiments of the invention.

In some modern wireless communication systems, the wireless communication system may transmit a message to a MS indicating an uplink channel's unavailability. Notably, if this feature is supported in the wireless communication system, it is transmit using an 'individually-addressed' message. On receipt and processing of this message, the specifically-addressed MS is able to take appropriate action based on this knowledge.

An embodiment of the present invention proposes that the transmission of such an 'uplink channel unavailability' message is performed using a specific 'broadcast address', which all MSs are configured to listen to. In this manner, the message is made available to all MSs allocated on, or directed to, that particular frequency.

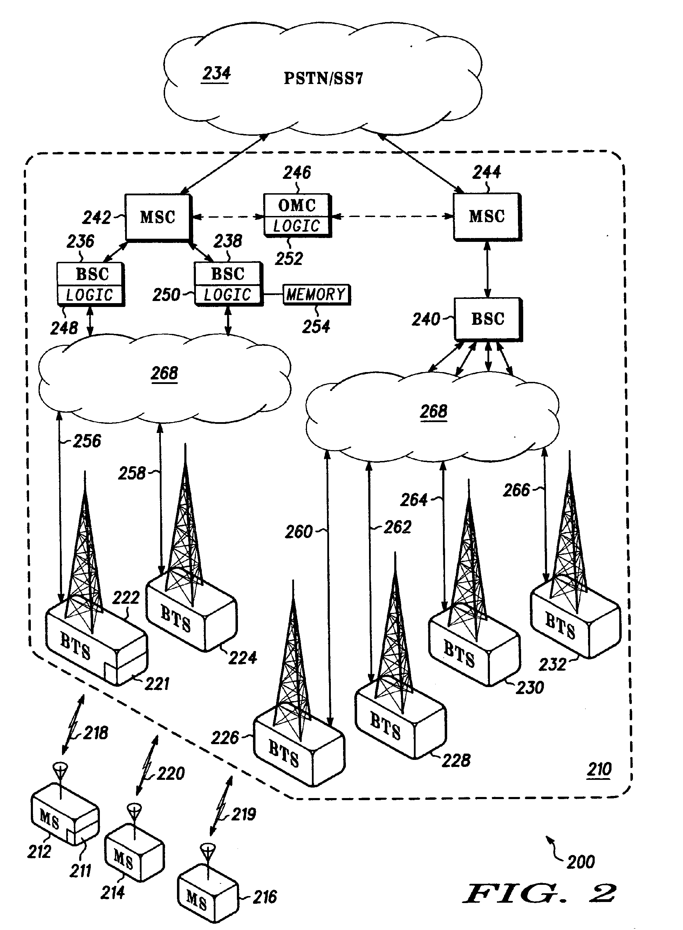

Referring first to FIG. 2, a trunked radio communication system 200 supporting a TErrestrial Trunked RAdio (TETRA) air-interface is shown in outline, in accordance with an embodiment of the invention. The European Telecommunications Standards Institute (ETSI) has defined the TETRA air interface. Generally, the air-interface protocol is administered from base sites that are geographically spaced apart - one base site supporting a cell or sectors of a cell.

A plurality of subscriber units, such as a mixture of MSs 212-216 and fixed terminals (not shown), communicate over a selected air-interface 218-220 with a plurality of serving base transceiver stations (BTS) 222-232. The BTSs 222-232 may be connected to a conventional public-switched telephone network (PSTN) 234 through base station controllers (BSCs) 236-240 and mobile switching centres (MSCs) 242-244. Each BTS 222-232 is principally designed to serve its primary cell, with each BTS 222-232 containing one or more transceivers. In a TETRA system, infrastructure elements including the BTS (sometimes referred to as a base station (BS)) may be grouped and defined as the Switching and Management Infrastructure (SwMI). For the purposes of the present invention, the different terminology used should be considered as interchangeable.

Each BSC 236-240 may control one or more BTSs 222-232, with BSCs 236-240 generally interconnected through MSCs 242-244. Each BSC 236-240 is therefore able to communicate with one another, if desired, to pass system administration information therebetween, with BSCs responsible for establishing and maintaining control channel and traffic channels to serviceable MSs affiliated therewith. The interconnection of BSCs therefore allows the trunked radio communication system to support handover of the MSs between cells.

Each MSC 242-244 provides a gateway to the PSTN 234, with MSCs interconnected through an operations and management centre (OMC) 246 that administers general control of the trunked radio system 200, as will be understood by those skilled in the art. The various system elements, such as BSCs 236-238 and OMC 246, will include control logic 248-252, with the various system elements usually having associated memory element 254 (shown only in relation to BSC 238 for the sake of clarity). The memory element 254 typically stores historically compiled operational data as well as in-call data, system information and control algorithms.

In accordance with an embodiment of the present invention, one or more BTS(s) 222-232 have been adapted to implement the inventive concepts hereinafter described. One or more BTS(s), for example BTS 222, includes a controller and/or signal processor 221 that has been adapted to initiate a downlink 'broadcast' transmission of an 'uplink channel unavailable' message using a specific 'broadcast address'. Advantageously, a number (preferably all) MSs operating in the cell and supported by the one or more BTS are configured to listen to this specific 'broadcast address' to receive such a message. In this manner, the message is made available to all MSs listening to the specific 'broadcast address'. Preferably, the 'uplink channel unavailable' message is sent using a low-level protocol message, for example a Medium Access Control (MAC) message, which is defined to contain a control flag/element (e.g. "Radio Uplink Failure") that indicates uplink unavailability of a particular channel. On receipt and processing of this message, an MS is able to take appropriate action.

Preferably, the BTS is configured to continue to transmit the 'uplink channel unavailable' message periodically on the specific broadcast channel or to a broadcast address, whilst continuing to assess the uplink signal performance of the jammed/interfered channel, for example by examining the received signal strength and attempting to correctly decode any received signal on that channel. In this manner, as every MS monitoring that specific frequency will be able to correctly decode the broadcast message, the system effectively reduces the number of transmission attempts on the jammed/unavailable channel.

In accordance with an embodiment of the present invention, the one or more BTS(s) will continue to monitor the uplink channel and consider any non-decodable signal presence in the uplink channel as an interfering/jamming signal. As soon as the presence of an interfering/jamming signal ceases, the system will stop broadcasting the "uplink non-availability" message. Thus, the MSs will conclude that normal uplink performance has been resumed.

The various adapted components within one or more BTS, say BTS 222, and one or more MS, say MS 212, can be realised in discrete or integrated component form. More generally, the functionality associated with generating, administering and responding to broadcast unavailable uplink channel messages, may be implemented in a respective communication unit (BTS 222 and/or MS 212) in any suitable manner. For example, new apparatus may be added to a conventional communication unit, or alternatively existing parts of a conventional communication unit may be adapted, for example by reprogramming one or more processors 211, 221 therein. As such, the required adaptation may be implemented in the form of processor-implementable instructions stored on a storage medium, such as a floppy disk, hard disk, programmable read-only memory (PROM), random access memory (RAM) or any combination of these or other storage media.

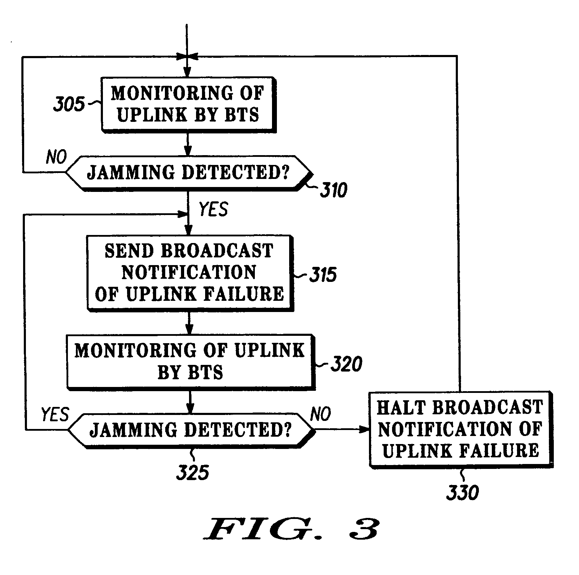

Referring now to FIG. 3, a flowchart 300 illustrates an embodiment of a wireless communication system's operation. The flowchart commences in step 305 with the BTS continuously monitoring a performance of the uplink channels. This process continues as long as the BTS fails to detect jamming on one or more of the uplink channels, in step 310. However, once jamming is detected in step 310, for example by detecting a presence of a non-decodable signal, the BTS transmits a broadcast message that indicates there is a communication failure in one or more of the uplink channels, as shown in step 315.

Preferably, the BTS continues to monitor the uplink channels, particularly the one or more uplink channels that have been identified as faulty due to, say, being jammed or suffering interference from other RF transmissions, as in step 320. Whilst the one or more faulty/ jammed uplink channels continue(s) to be faulty/jammed, in step 325, the process loops around steps 315, 320 and 325.

Thus, any MSs allocated to, or arriving at, the frequency that has an interfered uplink channel will be able to recognise that the frequency is faulty/ jammed by decoding the broadcast message transmitted on the specific broadcast channel/frequency indicating the uplink failure conditions. In this manner, in response to such a determination, the MS may initiate re-selection to a different cell. Alternatively, the MS may move to another frequency within the same cell. A yet further alternative is that the MS may decide to remain on the jammed frequency if only downlink information and/or services are expected.

If the one or more uplink channels identified as being faulty/jammed is subsequently found to be functioning correctly in step 325, the BTS halts its broadcast notification of that/those uplink failure(s), as shown in step 330. The process then reverts to step 305, for general BTS monitoring of uplink channels.

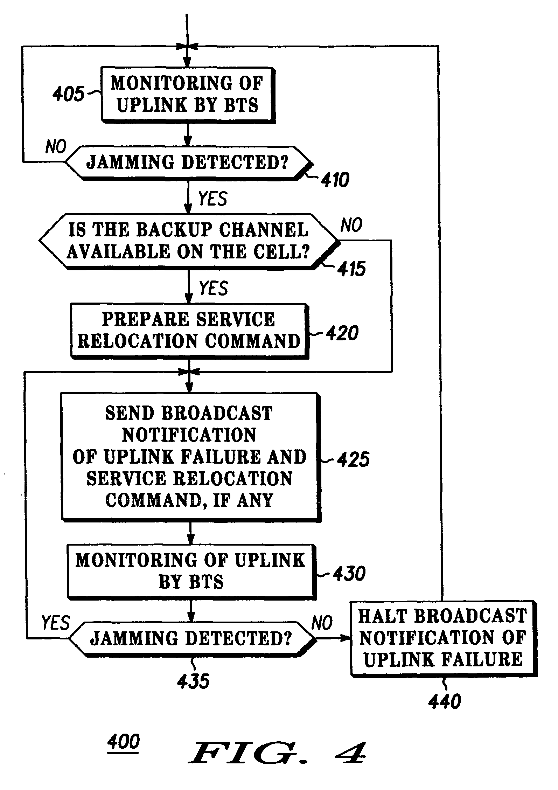

Referring now to FIG. 4, a flowchart 400 of a wireless communication system's operation is illustrated according to an enhanced embodiment of the present invention. The flowchart commences in step 405 with the BTS continuously monitoring the uplink channels. This process continues as long as the BTS fails to detect jamming on one or more of the uplink channels, in step 410. However, once jamming is detected in step 410, for example by detecting a presence of a non-decodable signal, the BTS determines whether one or more back-up channels are available, as shown in step 415. If one or more back-up channels is/are available in step 415, the BTS prepares a service re-location command to broadcast to all served MS, as shown in step 420. If one or more back-up channels is/are not available in step 415, the process moves to step 425.

The BTS then transmits a broadcast message that indicates there is a communication failure in one or more of the uplink channels, as shown in step 425. It is envisaged, in one embodiment that the broadcast message may be sent on a `per channel' basis, with the broadcast message sent on a current channel, indicating the unavailability of that appropriate uplink. In an enhanced embodiment of the present invention, the broadcast message in step 425 also includes any appropriate service re-location command, dependent upon the previous determination in step 415. Preferably, the BTS continues to monitor the uplink channels, particularly the one or more uplink channels that have been identified as faulty due to, say, being jammed or suffering interference from other RF transmissions, as in step 430. Whilst the one or more faulty/jammed uplink channels continue(s) to be faulty/jammed, in step 435, the process loops around steps 425, 430 and 435. Otherwise, when jamming or interference is no longer detected, the broadcast transmission of an uplink failure message is halted, in step 440, and the process returns to step 405. Thus, in the enhanced embodiment of the present invention, the BTS is able to use the broadcast message in order to direct any interested MS(s) to the back-up channel if available.

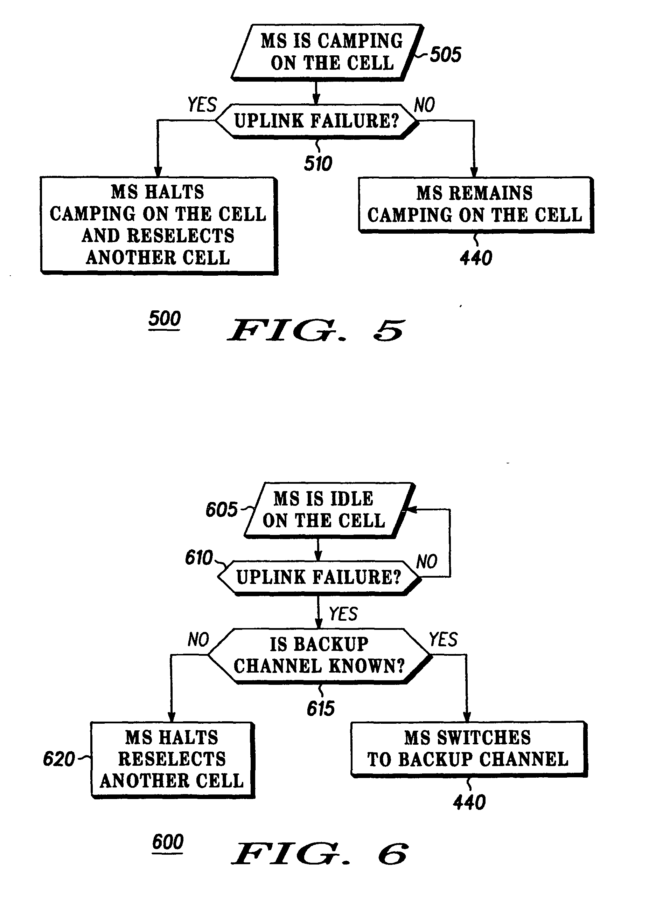

Referring now to FIG. 5, a flowchart 500 illustrates an MS's operation in response to a 'broadcast' uplink-failure message, when attempting to register on a cell, in accordance with an embodiment of the present invention. In this scenario, it is assumed that the MS is attempting to register/camp on a cell, as shown in step 505. If an uplink failure indication is received in step 510, the MS halts the 'camping' process and may decide to re-select to another cell, as shown in step 515, in accordance with known cell-reselection techniques. Whilst the MS does not receive the uplink failure message in step 510, the MS continues to attempt to camp on the cell, as shown in step 520.

In this manner, the MS is able to adapt its registration process in a real-time manner dependent upon the information contained in the broadcast transmission received from the BTS.

Referring now to FIG. 6, a flowchart 600 illustrates an MS's operation in response to an uplink failure indication when in 'idle' mode, in accordance with an embodiment of the present invention. In this scenario, it is assumed that the MS is in an 'idle' mode of operation, i.e. the MS is "camped" on the cell but not currently in service. Thus, the MS is able to continue monitoring the downlink channel. If an uplink-failure message is received in step 610, the MS determines whether a back-up channel exists, as shown in step 615. If a back-up channel does exist in step 615, the MS may decide to re-select to this back-up channel, as shown in step 625. Alternatively, if a back-up channel does not exist in step 615, the MS may decide to re-select to another cell, as shown in step 620.

Thus, in this manner, when the system supports multiple control channels on the cell and supplies a list of the multiple control channels to the MS, the MS may immediately switch to one of the back-up frequencies. Alternatively, the MS is able to postpone the transition until the moment it needs to send an uplink message.

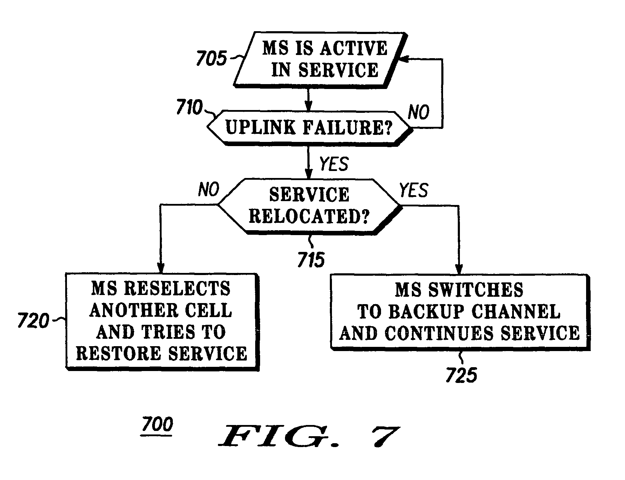

Referring now to FIG. 7, in a further enhanced embodiment of the present invention, flowchart 700 proposes that the BTS includes a 'channel allocation' element within the broadcast message. The preferred embodiment of the present invention uses a known TETRA MAC-RESOURCE PDU with a known "power Control information element "Radio Uplink Failure". The 'channel allocation' element serves as a notification of an alternative uplink channel to be used.

In the embodiments of the present invention, a known TETRA MAC-RESOURSE PDU may be used with a known power control information element, i.e. "Radio Uplink Failure". Notably, this message is addressed to a broadcast address rather than to the individual MS, and preferably it still carries a channel allocation element.

In the TETRA operating protocol standard, a channel allocation element is normally sent together with a Layer-3 PDU. A Layer-3 PDU allows routing of the information to a Layer-3 entity that decides whether service and channel allocations are accepted or rejected.

In an enhanced embodiment of the present invention, it is envisaged that a combination of "Radio uplink failure" and channel allocations will allow lower layers (e.g. MAC) to decide that service is re-located, without involving upper layers.

Additionally, in an embodiment where a single broadcast message contains all channels that are jammed, it is proposed that a new Layer-3 message, e.g. a D-UPLINK-SERVICE PDU, is used. The new Layer-3 message would preferably contain a list of frequencies supported by the cell site together with a specific availability bit associated with each frequency and indicating its availability. In this case, without any loss of generality, a value "1" may be used to indicate an operational frequency, whilst a value "0" may be used to indicate that, for that specific frequency, the uplink channel is jammed and unreliable. Furthermore, it is envisaged that this embodiment can be expanded to a D-NETWORK-BROADCAST PDU that is sent on the downlink channel and provides the information about the adjacent cells. In this case, it is envisaged that additional bits can be introduced into the message that will indicate those neighbouring cells that are experiencing a jamming attack.

Flowchart 700 illustrates an MS's operation in response to an uplink failure message when in an 'active' mode of operation (step 705), in accordance with an embodiment of the present invention. If an uplink failure indication is received in step 710, the MS determines whether the broadcast message includes a 'service re-located' command, as shown in step 715. If the broadcast message includes a 'service re-located' command in step 715, the MS may decide to switch to the back-up channel and continue service, as shown in step 725. Alternatively, if the broadcast message does not include a 'service re-located' command in step 715, the MS may decide to re-select to another cell in order to restore service, as shown in step 720.

Thus, in this manner, when the system supports 'service relocation' commands within a cell, for example where the command is broadcast within an uplink failure message, the MS is able to move to the back-up channel without a break in its service. Advantageously, the introduction of the inventive concepts described herein into most modern wireless communication systems can be implemented by re-programming of one or more processors within a BTS. Notably, the re-programming of the one or more processors comprise introducing a supplementary protocol allowing broadcast addressing of uplink failure conditions.

A particular advantage of the proposed methods is the ability of the system to promptly respond to hostile or occasional interference (jamming) of the uplink channel, for example in FDD-type systems, thereby supporting increased service availability to the users.

Although embodiments of the invention have been described in general with reference to the TETRA communication standard, utilising a TDMA access protocol, the inventive concepts contained herein are clearly suitable to alternative radio communication system technologies, such as GSM, universal mobile telecommunications system (UMTS), 3^{rd} generation partnership project (3GPP), general packet radio system (GPRS), etc. operating similar or alternative access protocols. Furthermore, the invention finds particular application in systems that combine FDM and TDM technologies, such as TETRA, GSM, etc.

Although the invention has also been described with reference to an FDD-based communication system, where the interference occurs on one or more inbound frequency channels, it is envisaged that the same inventive concepts can be applied to alternative duplex technologies, such as a TDD-based system, where the interference occurs on one or more time slots/frames. In this context, instead of providing broadcast transmissions on a particular frequency, the transmissions can be broadcast to MSs within one or more pre-defined time-slots or on one or more pre-defined time-slots on one or more particular frequencies.

It is also within the contemplation of the invention that alternative message formats, and/or associated data, can be accommodated for within the inventive concepts described herein. The invention is therefore not to be considered as being limited to the message format and/or associated data described above. For example, the messages may be transmitted in traffic or signalling channels, and may be included at various positions (header, data, tail, etc.) in, for example, a packet data transmission. Indeed, in a cellular system, the broadcast messages may be sent in a short message service format or on a broadcast paging channel or via any other appropriate means.

It is also within the contemplation of the present invention that any system where jamming or occasional interference may be a problem could benefit from the inventive concepts described herein.

Thus, it will be understood that the embodiments described above offer, at least, the possibility of one or more of the following advantages:
(i) The broadcast transmission of a 'channel unavailable' message minimises the impact of the interfering/jamming signals on current and subsequent calls;
(ii) A prompt system response to hostile or occasional interference (jamming) of the uplink channel can be achieved, particularly useful in FDD type systems; and
(iii) It provides increased service availability to the users, by re-directing users and potential users away from problematic frequencies. This is of a particular importance to the public safety and military users.

Whilst specific, and preferred, implementations of the present invention are described above, it is clear that one skilled in the art could readily apply further variations and modifications of such inventive concepts, as claimed.

Thus, a wireless communication system, communication unit and methods of communication have been provided that alleviate the aforementioned undesirable interference/jamming problems.

## Claims

1. A wireless communication system (200) comprising at least one wireless serving communication unit (222) operable to serve a plurality of mobile stations (212-216) with a communication resource (218-220), the at least one wireless serving communication unit (222) comprising a transmitter for transmitting a signal to at least one of the plurality of mobile stations (212-216) on an outbound communication resource channel, and a receiver for receiving a communication signal from at least one of the plurality of mobile stations (212-216) on an uplink or inbound communication resource channel, wherein the at least one wireless serving communication unit (222) is operable to transmit a broadcast message on an outbound communication resource channel indicating a non-availability of one or more uplink communication resource channels, the broadcast message indicating a non-availability of one or more uplink communication resource channels being initiated in response to a detected interference or jamming of the inbound communication resource, **characterised in that** the wireless serving communication unit (222) is operable to determine whether one or more back up uplink channels is available and, if one or more back up uplink channels is available, to broadcast within the broadcast message to all served mobile stations (212-216) a service re-location command including a channel allocation notification of an alternative inbound or uplink channel to be used.

2. A system according to claim 1 wherein each of the mobile stations (212-216) is operable to receive the broadcast message and to determine whether a service re-location command is included in the message and, if it is, to switch to a back up channel indicated in the message to continue service.

3. A system according to Claim 1 or claim 2, wherein the at least one wireless serving communication unit (222) is operable to detect interference or jamming of the inbound communication resource.

4. A system (200) according to claim 1, claim 2 or claim 3 wherein the wireless communication system (200) is a frequency division duplex-based communication system and the at least one wireless serving communication unit (222) is operable to broadcast information to at least one of the plurality of remote units (212-216) indicating at least one other frequency where an uplink communication resource channel is available.

5. A wireless communication system (200) according to any one preceding Claim, wherein the wireless communication system (200) is further **characterised in that** the wireless serving communication unit is operable to send a broadcast message which is a medium access control message or other low-level protocol message.

6. A system (200) according to any one preceding Claim, wherein the at least one wireless serving communication unit (222) is operable to continue to transmit the broadcast message periodically or intermittently on a broadcast channel or on a specific channel to a broadcast address on a specific channel, to be received and processed by the mobile stations located on that specific channel.

7. A wireless communication system (200) according to any one preceding Claim, wherein the wireless communication system (200) comprises a TETRA wireless communication system.

8. A base transceiver station (222-232, 212-216) adapted to operate as the wireless serving communication unit in the wireless communication system (200) according to any one of any one of the preceding Claims.

9. A mobile station (212-216) adapted to operate as one of the mobile stations in the wireless communication system (200) according to any one of any one of claims 2 to 8.

10. A base transceiver station according to claim 8 or a mobile station according to claim 9 which is operable in accordance with TETRA standard procedures.

11. A method of operation in a wireless communication system (200) comprising at least one wireless serving communication unit (222) operable to serve a plurality of mobile stations (212-216) with a communication resource (218-220), the method including detecting interference or jamming of the inbound communication resource channel, transmitting by the wireless serving communication unit on an outbound communication resource channel a broadcast message indicating a non-availability of one or more uplink communication resource channels, and **characterised by** determining by the wireless serving communication unit (222) whether one or more back up uplink channels is available and, if one or more back up uplink channels is available, broadcasting within the broadcast message to all served mobile stations (212-216) a service re-location command including a channel allocation notification of an alternative uplink channel to be used.

12. A method according to claim 11 wherein each of the served mobile stations (212-216) receives the broadcast message and determines whether a service re-location command is included in the message and, if it is, switches to a back up channel indicated in the message to continue service.

13. A method according to claim 11 or claim 12, wherein the step of transmitting a broadcast message is continued periodically until there is no longer a detection of a jamming or interference signal.

14. A method according to any one of preceding Claims 11 to 13, wherein the step of transmitting a broadcast message comprises transmitting the broadcast message periodically or intermittently on a broadcast channel.

## Patentansprüche

1. System zur drahtlosen Kommunikation (200), das mindestens eine drahtlos bedienende Kommunikationseinheit (222) umfasst, die betriebsfähig ist, eine Vielzahl von Mobilstationen (212-216) mit einer Kommunikationsressource (218-220) zu bedienen, wobei die mindestens eine drahtlos bedienende Kommunikationseinheit (222) einen Sender zum Übertragen eines Signals zu mindestens einer von der Vielzahl von Mobilstationen (212-216) auf einem abgehenden Kommunikationsressourcenkanal und einen Empfänger zum Empfangen eines Kommunikationssignals von mindestens einer von der Vielzahl von Mobilstationen (212-216) auf einem Uplink- oder eingehenden Kommunikationsressourcenkanal umfasst, wobei die mindestens eine drahtlos bedienende Kommunikationseinheit (222) betriebsfähig ist, eine Rundsendenachricht auf einem abgehenden Kommunikationsressourcenkanal zu übertragen, die eine Nichtverfügbarkeit von einem oder mehreren Uplink-Kommunikationsressourcenkanälen anzeigt, wobei die Rundsendenachricht, die eine Nichtverfügbarkeit von einem oder mehreren Uplink-Kommunikationsressourcenkanälen anzeigt, veranlasst wird als Antwort auf eine erkannte Interferenz oder Störung der eingehenden Kommunikationsressource, **dadurch gekennzeichnet, dass** die drahtlos bedienende Kommunikationseinheit (222) betriebsfähig ist, zu bestimmen, ob ein oder mehrere Backup-Uplink-Kanäle verfügbar sind, und, wenn ein oder mehrere Backup-Uplink-Kanäle verfügbar sind, an alle bedienten Mobilstationen (212-216) innerhalb der Rundsendenachricht eine Dienstverlagerungsanweisung zu übertragen, die eine Kanalzuweisungsbenachrichtigung eines zu verwendenden alternativen eingehenden oder Uplink-Kanals beinhaltet.

2. System nach Anspruch 1, wobei jede der Mobilstationen (212-216) betriebsfähig ist, die Rundsendenachricht zu empfangen und zu bestimmen, ob eine Dienstverlagerungsanweisung in der Nachricht enthalten ist und in diesem Fall auf einen in der Nachricht angegebenen Backupkanal umzuschalten, um den Dienst fortzusetzen.

3. System nach Anspruch 1 oder 2, wobei die mindestens eine drahtlos bedienende Kommunikationseinheit (222) betriebsfähig ist, eine Interferenz oder Störung der eingehenden Kommunikationsressource zu erkennen.

4. System (200) nach Anspruch 1, Anspruch 2 oder Anspruch 3, wobei das System zur drahtlosen Kommunikation (200) ein auf einem Frequenzduplex-Verfahren basierendes Kommunikationssystem ist und die mindestens eine drahtlos bedienende Kommunikationseinheit (222) betriebsfähig ist, Rundsendeinformationen zu mindestens einer von der Vielzahl von entfernten Einheiten (212-216) zu übertragen, die mindestens eine anderer Frequenz angibt, auf der ein Uplink-Kommunikationsressourcenkanal verfügbar ist.

5. System zur drahtlosen Kommunikation (200) nach einem der vorhergehenden Ansprüche, wobei das System zur drahtlosen Kommunikation (200) weiter **dadurch gekennzeichnet ist, dass** die drahtlos bedienenden Kommunikationseinheit betriebsfähig ist, eine Rundsendenachricht zu versenden, die eine Mediumzugriffssteuerungsnachricht oder eine andere Low-Level-Protokollnachricht ist.

6. System (200) nach einem der vorhergehenden Ansprüche, wobei die mindestens eine drahtlos bedienende Kommunikationseinheit (222) betriebsfähig ist, die Rundsendenachricht periodisch oder mit Unterbrechungen auf einem Rundsendekanal oder auf einem spezifischen Kanal an eine Rundsendeadresse auf einem spezifischen Kanal zu übertragen, die von den mobilen Stationen, die sich auf diesem spezifischen Kanal befinden, zu empfangen und zu verarbeiten ist.

7. System zur drahtlosen Kommunikation (200) nach einem der vorhergehenden Ansprüche, wobei das System zur drahtlosen Kommunikation (200) ein TETRA-System für drahtlose Kommunikation umfasst.

8. Basistransceiverstation (222-232, 212-216), geeignet, als die drahtlos bedienende Kommunikationseinheit in dem System zur drahtlosen Kommunikation gemäß einem der vorhergehenden Ansprüche zu arbeiten.

9. Mobilstation (212-216), geeignet, als einer der Mobilstationen in dem System zur drahtlosen Kommunikation (200) gemäß einem der Ansprüche 2 bis 8 zu arbeiten.

10. Basistransceiverstation nach Anspruch 8 oder Mobilstation nach Anspruch 9, die gemäß dem TETRA-Standard entsprechenden Arbeitsverfahren betrieben werden kann.

11. Betriebsverfahren für ein System zur drahtlosen Kommunikation (200), das mindestens eine drahtlos bedienende Kommunikationseinheit (222) umfasst, die betriebfähig ist, eine Vielzahl von Mobilstationen (212-216) mit einer Kommunikationsressource (218-220) zu bedienen, wobei das Verfahren beinhaltet, eine Interferenz oder Störung des eingehenden Kommunikationsressourcenkanals zu erkennen, mit der drahtlos bedienenden Kommunikationseinheit auf einem abgehenden Kommunikationsressourcenkanal eine Rundsendenachricht zu übertragen, die eine Nichtverfügbarkeit von einem oder mehreren Uplink-Kommunikationsressourcenkanälen angibt, und das **gekennzeichnet ist durch** das Bestimmen **durch** die drahtlos bedienende Kommmunikationseinheit (222), ob einer oder mehrere Backup-Uplink-Kanäle verfügbar sind, und, wenn ein oder mehrere Backup-Uplink-Kanäle verfügbar sind, ein Übertragen einer Dienstverlagerungsanweisung innerhalb der Rundsendenachricht an alle bedienten Mobilstationen (212-216), die eine Kanalzuweisungbenachrichtigung eines zu verwendenden alternativen Uplink-Kanals beinhaltet.

12. Verfahren nach Anspruch 11, wobei jede der bedienten Mobilstationen (212-216) die Rundsendenachricht empfängt und bestimmt, ob eine Dienstverlagerungsanweisung in der Nachricht enthalten ist und in diesem Fall auf einen in der Nachricht angegebenen Backupkanal umschaltet, um den Dienst fortzusetzen.

13. Verfahren nach Anspruch 11 oder Anspruch 12, wobei der Schritt des Übertragens einer Rundsendenachricht periodisch fortgesetzt wird, bis kein Stör- oder Interferenz-Signal mehr erkannt wird.

14. Verfahren nach einem der vorhergehenden Ansprüche 11 bis 13, wobei der Schritt des Übertragens einer Rundsendenachricht umfasst, die Rundsendenachricht periodisch oder mit Unterbrechungen auf einem Rundsendekanal zu übertragen.

## Revendications

1. Système de communication sans fil (200) comprenant au moins une unité de desserte de communication sans fil (222) utilisable pour desservir une pluralité stations mobiles (212 - 216) avec une ressource de communication (218 - 220), l'au moins une unité de desserte de communication sans fil (222) comprenant un émetteur pour émettre un signal à destination d'au moins l'une des multiples stations mobiles (212 - 216) sur un canal de ressource de communication sortant, et un récepteur pour recevoir un signal de communication en provenance d'au moins l'une des multiples stations mobiles (212 - 216) sur un canal de ressource de communication entrant ou montant, où l'au moins une unité de desserte de communication sans fil (222) est utilisable pour émettre sur un canal de ressource de communication sortant un message de diffusion indiquant une indisponibilité d'un ou plusieurs canaux de ressource de communication montants, le message de diffusion indiquant une indisponibilité d'un ou plusieurs canaux de ressource de communication montants étant déclenché en réponse à la détection d'une interférence ou d'un brouillage sur la ressource de communication entrante, **caractérisé en ce que** l'unité de desserte de communication sans fil (222) est utilisable pour déterminer si un ou plusieurs canaux montants de secours sont disponibles et, si un ou plusieurs canaux montants de secours sont disponibles, diffuser à toutes les stations mobiles (212 - 216) desservies, dans le message de diffusion, une commande de relocalisation de service comprenant une notification d'allocation de canal d'un autre canal entrant ou montant à utiliser.

2. Système selon la revendication 1, dans lequel chacune des stations mobiles (212 - 216) est utilisable pour recevoir le message de diffusion et déterminer si une commande de relocalisation de service est ou non incluse dans le message et, si tel est le cas, commuter vers un canal de secours indiqué dans le message pour continuer le service.

3. Système (200) selon la revendication 1 ou la revendication 2, dans lequel l'au moins une unité de desserte de communication sans fil (222) est utilisable pour détecter une interférence ou un brouillage sur la ressource de communication entrante.

4. Système (200) selon la revendication 1, la revendication 2 ou la revendication 3, dans lequel le système de communication sans fil (200) est un système de communication à duplexage temporel et l'au moins une unité de desserte de communication sans fil (222) est utilisable pour diffuser à destination d'au moins l'une des multiples unités distantes (212 - 216) des informations indiquant au moins une autre fréquence à laquelle un canal de ressource de communication montant est disponible.

5. Système de communication sans fil (200) selon l'une quelconque des revendications précédentes, dans lequel le système de communication sans fil (200) est également **caractérisé en ce que** l'unité de desserte de communication sans fil est utilisable pour envoyer un message de diffusion qui est un message de commande d'accès au support ou un autre message de protocole de bas niveau.

6. Système (200) selon l'une quelconque des revendications précédentes, dans lequel l'au moins une unité de desserte de communication sans fil (222) est utilisable pour continuer à émettre le message de diffusion de manière périodique ou intermittente sur un canal de diffusion ou sur un canal spécifique à destination d'une adresse de diffusion sur un canal spécifique, de façon qu'il soit reçu et traité par les stations mobiles situées sur ce canal spécifique.

7. Système de communication sans fil (200) selon l'une quelconque des revendications précédentes, dans lequel le système de communication sans fil (200) comprend un système de communication sans fil TETRA.

8. Station émettrice-réceptrice de base (222 - 232, 212 - 216) adaptée pour jouer le rôle de l'unité de desserte de communication sans fil dans le système de communication sans fil (200) selon l'une quelconque des revendications précédentes.

9. Station mobile (212 - 216) adaptée pour jouer le rôle de l'une des stations mobiles dans le système de communication sans fil (200) selon l'une quelconque des revendications 2 à 8.

10. Station émettrice-réceptrice de base selon la revendication 8 ou station mobile selon la revendication 9, qui est utilisable selon des procédures standard TETRA.

11. Procédé d'exploitation d'un système de communication sans fil (200) comprenant au moins une unité de desserte de communication sans fil (222) utilisable pour desservir une pluralité de stations mobiles (212 - 216) avec une ressource de communication (218 - 220), le procédé comprenant la détection d'une interférence ou d'un brouillage sur le canal de ressource de communication entrant, l'émission par l'unité de desserte de communication sans fil, sur un canal de ressource de communication sortant, d'un message de diffusion indiquant une indisponibilité d'un ou plusieurs canaux de ressource de communication montants, et **caractérisé par** la détermination par l'unité de desserte de communication sans fil (222) du fait qu'un ou plusieurs canaux montants de secours sont ou non disponibles et, si un ou plusieurs canaux montants de secours sont disponibles, la diffusion à toutes les stations mobiles (212 - 216) desservies, dans le message de diffusion, une commande de relocalisation de service comprenant une notification d'allocation de canal d'un autre canal montant à utiliser.

12. Procédé selon la revendication 11, dans lequel chacune des stations mobiles desservies (212 - 216) reçoit le message de diffusion et détermine si une commande de relocalisation de service est incluse ou non dans le message et, si tel est le cas, commute vers un canal de secours indiqué dans le message pour continuer le service.

13. Procédé selon la revendication 11 ou la revendication 12, dans lequel l'étape d'émission d'un message de diffusion est continuée de manière périodique jusqu'à ce qu'il ne soit plus détecté aucun signal de brouillage ou d'interférence.

14. Procédé selon l'une quelconque des revendications 11 à 13, dans lequel l'étape d'émission d'un message de diffusion comprend l'émission du message de diffusion d'une manière périodique ou intermittente sur un canal de diffusion.
